# EUROPÄISCHE PATENTANMELDUNG

(11) **EP 4 484 120 A2**
(43) Veröffentlichungstag der Anmeldung: **01.01.2025**
(21) Anmeldenummer: 24212308.1
(22) Anmeldetag: 24.08.2021
(51) Int. Cl.: B29C 49/78

(54) **VORRICHTUNG UND VERFAHREN ZUM ERWÄRMEN VON KUNSTSTOFFVORFORMLINGEN MIT ORTSAUFGELÖSTER TEMPERATURERFASSUNG**

(30) Priorität: 04.09.2020 DE 102020123166
(62) Teilanmeldung aus: 23166010.1
(71) Anmelder: Krones AG, 93073 Neutraubling (DE)
(72) Erfinder: Lappe, Ulrich, 93073 Neutraubling (DE); Hirdina, Jochen, 93073 Neutraubling (DE)
(74) Vertreter: Grünecker Patent- und Rechtsanwälte PartG mbB

(57) **Zusammenfassung**

Vorrichtung (2) zum Erwärmen von Kunststoffvorformlingen (10) mit einer Transporteinrichtung (22), welche die Kunststoffvorformlinge entlang eines vorgegebenen Transportpfads (P) transportiert, mit wenigstens einer Heizeinrichtung (24a, 24b), welche entlang des Transportpfads der Kunststoffvorformlinge (10) angeordnet ist, um die Kunststoffvorformlinge während ihres Transports zu erwärmen,
dadurch gekennzeichnet, dass
die Vorrichtung (1) eine Temperaturerfassungseinrichtung (6) aufweist, welche dazu geeignet ist, eine Temperatur der Kunststoffvorformlinge ortsaufgelöst zu erfassen.

## Beschreibung

Die vorliegende Erfindung betrifft eine Vorrichtung und ein Verfahren zum Erwärmen von Kunststoffvorformlingen. Derartige Vorrichtungen und Verfahren sind aus dem Stand der Technik seit langem bekannt. Üblicherweise werden in einem mehrstufigen Prozess zunächst Kunststoffvorformlinge erwärmt und diese dann anschließend mit einer Umformungseinrichtung, wie etwa einer Streckblasmaschine, zu Kunststoffbehältnissen umgeformt. In jüngerer Zeit wird gehäuft dazu übergegangen, für die Kunststoffvorformlinge recyceltes Material zu verwenden. Insbesondere wird dabei das Material PET verwendet. Dieses Material führt jedoch zu Problemen, die im Folgenden geschildert werden.

Zunächst kann es bei recyceltem Material häufiger zu Verunreinigungen im Material und in einzelnen Kunststoffvorformlingen kommen und damit auch zu erhöhten Ausschussraten, da diese Verunreinigungen eine lokale Störung im Materialgefüge darstellen und ab einer bestimmten Größe letztlich auch zu Beschädigungen wie Flaschenplatzern im Blasvorgang führen und damit zu Störungen und auch einer erhöhten Ausschussrate.

Daneben können Schwankungen im Material bzw. in den Materialeigenschaften, insbesondere in der Wärmeaufnahme von Kunststoffvorformlingen, durch unterschiedliche Infrarotabsorptionsverhalten von Kunststoffvorformlingen, die insbesondere nebeneinander in Infrarotöfen beheizt werden zu einem stark abweichenden Aufheizverhalten und damit zu stark abweichenden Endtemperaturen beim Verlassen der Heizstrecke führen. Damit kann es aber auch zu stark unterschiedlichem Verhalten im nachfolgenden Streckblasprozess kommen und letztlich zu sehr unterschiedlichen Behältnisqualitäten. Dies kann bis zur Unbrauchbarkeit des gefertigten Behältnisses (sofern überhaupt noch ein Behältnis geblasen werden kann) führen oder sogar wiederum zum Platzen des Behältnisses schon im Herstellungsprozess und damit auch zu einer erhöhten Ausschussrate.

Der vorliegenden Erfindung liegt daher die Aufgabe zugrunde, die Ausschussrate, die insbesondere durch recyceltes Material entstehen kann, zu reduzieren. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Erwärmen von Kunststoffvorformlingen weist eine Transporteinrichtung auf, welche die Kunststoffvorformlinge entlang eines vorgegebenen Transportpfads transportiert. Daneben weist die Vorrichtung wenigstens eine Heizeinrichtung auf, welche entlang des Transportpfads der Kunststoffvorformlinge angeordnet ist, um die Kunststoffvorformlinge während ihres Transports zu erwärmen.

Erfindungsgemäß weist die Vorrichtung eine Temperaturerfassungseinrichtung auf, welche dazu geeignet und bestimmt ist, eine Temperatur der Kunststoffvorformlinge ortsaufgelöst zu erfassen.

Besonders bevorzugt handelt es sich bei der Erwärmungseinrichtung um einen Infrarot-Ofen, das heißt, die Erwärmung der Kunststoffvorformlinge erfolgt mit Infrarotstrahlung. Es wäre jedoch auch die Verwendung eines Mikrowellenofens denkbar. Bei einer bevorzugten Ausführungsform weist die Transporteinrichtung ein umlaufendes Transportmittel auf. Vorteilhaft sind an diesem umlaufenden Transportmittel, bei dem es sich beispielsweise um ein Transportrad, aber auch um eine Transportkette oder ein Transportband handeln kann, eine Vielzahl von Halteeinrichtungen angeordnet, die zum (insbesondere individuellen) Halten der Kunststoffvorformlinge dienen.

Bevorzugt transportiert die Transporteinrichtung die Kunststoffvorformlinge entlang einer Transportbahn, welche sowohl geradlinige Abschnitte als auch gekrümmte Abschnitte hat. Insbesondere ist die Temperaturerfassungseinrichtung in einem Abschnitt angeordnet, an dem die Kunststoffvorformlinge entlang eines gekrümmten Transportpfadabschnitts transportiert werden. So kann die Transporteinrichtung die Kunststoffvorformlinge entlang zweier geradliniger Abschnitte fördern, welche miteinander durch ein gekrümmtes Segment bzw. einen gekrümmten Abschnitt verbunden sind.

Es wird daher vorgeschlagen, dass die Kunststoffvorformlinge in der Heizeinrichtung bzw. dem Ofen beobachtet werden, insbesondere um Informationen darüber zu erlangen, die zu unten genauer beschriebenen Maßnahmen führen können, wie beispielsweise dem Ausschleusen des betreffenden Kunststoffvorformlings (auch Preform genannt) oder einem Eingriff in der nachfolgenden Blasformmaschine, um in jedem Fall ein Platzen von Behältnissen beim Blasprozess zu vermeiden.

Daneben sollen auch nachfolgende Probleme verhindert werden, wie etwa ein zu schnelles Auflaufen bzw. Befüllen Abfalltonnen und damit Maschinenstopps oder aber ein Füllen von Behältnissen mit Loch und damit eine Verunreinigung der Behälter usw. Die Erfindung schlägt daher vor, dass die Kunststoffvorformlinge ortsaufgelöst inspiziert werden, das heißt es wird nicht nur die Temperatur des gesamten Kunststoffvorformlings erfasst, sondern dieser wird ortaufgelöst inspiziert, sodass die Temperatur bestimmten Oberflächenbereichen des Kunststoffvorformlings zugeordnet werden kann.

Bei einer bevorzugen Ausführungsform weist die Temperaturerfassungseinrichtung wenigstens eine Infrarot-Bildaufnahme-Einrichtung auf, welche ein ortsaufgelöstes Bild der Kunststoffvorformlinge aufnimmt. Es wird daher vorgeschlagen, die Kunststoffvorformlinge an einer bestimmten Position, insbesondere, wie unten genauer beschrieben, in der Umlenkung des Infrarotofens, das heißt gewissermaßen auf halber Strecke mit einer Infrarot-Bildaufnahme-Einrichtung bzw. einer Infrarotkamera zu filmen. Dies hat den Vorteil, dass man zumindest eine komplette Abwicklung der Oberfläche jedes vorbeifahrenden Kunststoffvorformlings festhalten und anschließend analysieren kann.

Dabei können insbesondere stark unterschiedliche erwärmte Bereiche des Kunststoffvorformlings analysiert werden. Bei einer weiteren bevorzugten Ausführungsform ist die Temperaturerfassungseinrichtung stationär angeordnet. Dies bedeutet, dass bevorzugt die Kunststoffvorformlinge an der Temperaturerfassungseinrichtung vorbeitransportiert werden. Bevorzugt können ortsaufgelöste Bilder der Kunststoffvorformlinge während dieses Vorbei-Transports aufgenommen werden.

Bei einer weiteren bevorzugten Ausführungsform ist die Temperaturerfassungseinrichtung entlang eines Transportpfads der Kunststoffvorformlinge nach einer ersten Gruppe von Heizeinrichtungen und vor einer zweiten Gruppe von Heizreinrichtungen angeordnet.

Wie oben erwähnt, sind die Heizeinrichtungen bevorzugt stationär angeordnet und die Kunststoffvorformlinge werden von der Transporteinrichtung daran vorbeitransportiert. Bevorzugt sind die Heizeinrichtungen entlang eines geradlinig verlaufenden Transportabschnitts der Kunststoffvorformlinge angeordnet und zwischen diesen geradlinig verlaufenden Transportabschnitten befindet sich ein gekrümmt verlaufender Transportabschnitt und insbesondere ein Abschnitt, in dem die Transportrichtung der Kunststoffvorformlinge umgelenkt bzw. umgekehrt wird. In diesem Umlenkungsbereich befindet sich besonders bevorzugt die Temperaturerfassungseinrichtung.

Bevorzugt bildet damit die Transporteinrichtung einen Umlenkbereich aus, in dem die Transportrichtung der Kunststoffvorformlinge umgekehrt wird. In diesem Umlenkbereich ist bevorzugt die Temperaturerfassungseinrichtung angeordnet. Bei dieser Ausgestaltung wird, wie oben erwähnt, die Inspektion der Kunststoffvorformlinge gewissermaßen auf halber Strecke durchgeführt.

Es wäre jedoch auch möglich, die Bildaufnahmeeinrichtung bzw. die Temperaturerfassungseinrichtung am Ende der Heizeinrichtung anzuordnen, das heißt nach den zweiten Heizeinrichtungen. Die Anordnung in dem Umlenkbereich bietet den Vorteil einer Nachrüstbarkeit. Auch bietet diese Anordnung um Umlenkbereich den Vorteil, dass keine weiteren Aggregate oder Einheiten, wie etwa die Temperaturerfassungseinrichtungen nach dem Ofen verbaut werden müssen, um auf diese Weise auch die Strecke des Transports der Kunststoffvorformlinge zu einer Umformungseinrichtung kurz gehalten werden kann.

Bei einer weiteren bevorzugten Ausführungsform ist die Temperaturerfassungseinrichtung dazu geeignet und bestimmt, die Temperatur der Kunststoffvorformlinge entlang derer im Wesentlichen vollständigen Umfangsfläche und/oder Länge zu erfassen.

Zu diesem Zweck sind mehrere Vorgehensweisen denkbar. So wäre es möglich, dass die Temperaturerfassungseinrichtung zwei Bildaufnahmeeinrichtungen aufweist, die an den beiden gegenüberliegenden Zeiten des Transportpfades der Kunststoffvorformlinge angeordnet sind und die Kunststoffvorformlinge von beiden Seiten beobachten. Weiterhin wäre es möglich, dass eine Bildaufnahmeeinrichtung vorgesehen ist, welche mehrere Bilder der vorbeitransportierten Kunststoffvorformlinge aufnimmt. Bei einer bevorzugten Ausführungsform weist die Vorrichtung eine Dreheinrichtung auf, welche die Kunststoffvorformlinge wenigstens abschnittsweise entlang des Transportpfads um ihre eigene Längsrichtung transportiert. Diese Dreheinrichtung kann dabei während der Erwärmung eine gleichmäßige Erwärmung in der Kunststoffvorformlinge bewirken.

Bei einer weiteren bevorzugten Ausführungsform ist die Vorrichtung dazu geeignet und bestimmt, auch eine Gesamttemperatur und/oder Gesamtwärme der Kunststoffvorformlinge zu erfassen.

Bei einer weiteren bevorzugten Ausführungsform ist die Vorrichtung dazu geeignet, bestimmte Kunststoffvorformlinge in Reaktion auf eine erfasste Temperatur (eine ortsaufgelöste Temperatur oder auch eine Gesamttemperatur) zu identifizieren und/oder zu kennzeichnen. Unter einem Identifizieren und/oder Kennzeichnen wird dabei insbesondere ein Identifizieren für eine spätere Verarbeitung, etwa einen nachfolgenden Umformungsprozess verstanden; d.h. die Maschine ordnet diesem bestimmten Kunststoffvorformling insbesondere eine künftige Behandlungseinheit wie etwa eine Umformungsstation zu.

So kann beispielsweise festgestellt werden, dass eine Gesamtwärme bestimmter Kunststoffvorformlinge von einer Solltemperatur abweicht. Diese Abweichung kann abgespeichert werden, etwa in einem Schieberegister. Dabei können auch weitere Informationen mit abgespeichert werden wie etwa die Höhe der Abweichung im Vergleich zu einer Referenz, etwa dem Rezept, welches gerade gefahren wird.

Diese Informationen können an eine Steuerungs- oder Regelungseinrichtung weitergegeben werden, damit diese beispielsweise bestimmte Parameter ändern kann, wie etwa eine Reckgeschwindigkeit, einen Vorblasdauer oder einen Vorblaszeitpunkt für bestimmte Kunststoffvorformlinge. Dies kann dabei insbesondere stationsspezifisch für bestimmte Umformungsstationen erfolgen. Mit anderen Worten kann bevorzugt eine Steuerungs- und/oder Regelungseinrichtung einen Umformungsprozess für diese Kunststoffvorformlinge anpassen.

Bevorzugt ist jedoch auch eine Dreheinrichtung vorgesehen, welche die Kunststoffvorformlinge auch während des Transports in demjenigen Bereich dreht, in dem die Bildaufnahmeeinrichtung bzw. die Temperaturerfassungseinrichtung angeordnet ist. Auf diese Weise können von dem gleichen Kunststoffvorformling mehrere Aufnahmen aufgenommen werden.

Weiterhin ist besonders bevorzugt eine Beleuchtungseinrichtung vorgesehen, welche die Kunststoffvorformlinge zumindest während der Aufnahme von Bildern beleuchtet. Damit ist diese Beleuchtungseinrichtung bevorzugt in einem Bereich der Inspektionseinrichtung angeordnet oder bildet einen Bestandteil der Inspektionseinrichtung. Diese Beleuchtungseinrichtung kann dabei als Blitzlampe ausgeführt sein oder eine solche aufweisen.

Bei einer weiteren bevorzugten Ausführungsform weist die Vorrichtung oder die Temperaturerfassungseinrichtung eine Auswerteeinrichtung auf, welche die von einer Bildaufnahmeeinrichtung aufgenommenen Bilder auswertet und lokale Temperaturschwankungen der Kunststoffvorformlinge ermittelt.

Bei einer bevorzugten Ausgestaltung ist die Temperaturerfassungseinrichtung dazu geeignet und bestimmt, lokale Aufheizabweichungen eines Kunststoffvorformlings zu erfassen und bevorzugt ist dieser Kunststoffvorformling als fehlerhaft bzw. verunreinigt markierbar. Bei dieser Ausgestaltung wird vorgeschlagen, dass die Auswerteeinrichtung derartige Aufheizabweichungen erfasst und in Reaktion auf eine derartige Abweichung wird der entsprechende Kunststoffvorformling (etwa in einem Schieberegister) entsprechend markiert. In Reaktion kann dieser Kunststoffvorformling ausgeschleust werden, etwa an einem Einlauf eines Blasrades. Dieses Ausschleusen kann dabei insbesondere vor Beginn des Blasprozesses erfolgen.

Dabei ist es möglich, dass diese Auswerteeinrichtung zunächst mehrere Bilder zusammensetzt, um eine vollständige Abwicklung der Aufnahmen der jeweiligen Kunststoffvorformlinge zu erhalten. Innerhalb dieser Bilder kann beispielsweise nach lokalen Temperaturschwankungen etwa Bereichen, die mehr oder weniger erwärmt wurden, gesucht werden.

Dabei ist es möglich, dass das Bild im Bereich von Pixeln oder im Bereich von Gruppen von Pixeln ausgewertet wird, um auf diese Weise eine ortsaufgelöstes Temperaturprofil der Kunststoffvorformlinge zu erhalten.

Bevorzugt setzt die Auswerteeinrichtung zur Auswertung der von den Kunststoffvorformlingen aufgenommenen Bildern eine künstliche Intelligenz (KI) ein

So ist es möglich, dass etwa eine Bildverarbeitungs-Software vorgesehen ist, welche lokale Aufheizabweichungen erkennt. Ein so erfasster Kunststoffvorformling kann im Anschluss als fehlerhaft markiert werden und beispielsweise in einer Speichereinrichtung wie etwa einem Schieberegister als verunreinigt markiert werden. Daher ist es möglich, dass ein so gekennzeichneter Kunststoffvorformling an einer weiteren Position, beispielsweise an einem Einlauf zu einer Umformungseinrichtung ausgeschleust werden kann, bevor er in den Blasprozess eingeleitet wird. Alternativ könnte auch in anderer Weise verhindert werden, dass ein derartiger Kunststoffvorformling zu einem Behältnis geblasen wird, beispielsweise in dem die betreffende Blasstation für den Blasformvorgang abgeschaltet wird.

Weiterhin wäre es auch möglich, dass nicht nur die Tatsache erfasst wird, dass eine Temperaturabweichung besteht, sondern auch deren Ort lokalisiert wird. So könnte beispielsweise ein nachfolgender Blasformvorgang auf diesen betreffenden Fehler angepasst werden und etwa der entsprechende Kunststoffvorformling mit anderen Blasparametern geblasen werden. In diesem Fall ist es möglich, dass bei einer Abweichung der Gesamtwärme der Kunststoffvorformling ebenfalls markiert wird, beispielsweise mit einem Schieberegister, allerdings zusammen mit Informationen über die Höhe der Abweichungen im Vergleich zu einer Referenz bzw. einem (idealen) Kunststoffvorformling. Dabei könnte sich aber allerdings bei dieser Referenz auch um dasjenige Rezept handeln, welches gerade gefahren wird bzw. welches später geblasen werden soll. Auf diese Weise kann, wie unten genauer beschrieben, dass Temperaturprofil der Kunststoffvorformlinge verwendet werden, um eine Prognose über das künftig zu fertigende Behältnis abzugeben.

Bevorzugt bestehen die verwendeten Kunststoffvorformlinge aus PET.

Dabei ist es möglich, dass diese Informationen der Steuerungseinrichtung bzw. Regelungseinrichtung bzw. einer Blassteuerung übergeben werden, damit so stationsspezifisch in die Streckblas-Parameter eingegriffen werden kann, insbesondere eine Reckgeschwindigkeit, mit der die Reckstange Kunststoffvorformlinge dehnt, eine Vorblasdauer oder einen Vorblaszeitpunkt.

Auf diese Weise können die Informationen der Temperaturerfassungseinrichtungen dazu verwendet werden, um (beispielsweise mittels eines Algorithmus) nach wie vor eine Flasche zu blasen, die zumindest einigermaßen der Materialverteilung eines Referenzprozesses entspricht.

Daneben wäre es auch möglich, das Ergebnis der Temperaturerfassungseinrichtung durch geeignete und dem Blasprozess nachgelagerte Inline-Inspektionstechnik, wie beispielsweise eine Wanddickenmessung oder eine Bodeninspektion zu prüfen. Diese zusätzlichen Messtechniken könnten in einer weiteren bevorzugten Ausführungsform der Erfindung zu einer Parameteroptimierung dieses Algorithmus rückgespielt und verwendet werden. Auf diese Weise könnten die hier beschriebenen Algorithmen bzw. die Steuereinrichtung selbstlernend eingerichtet werden.

Es wäre daher möglich, das Ergebnis der Temperaturerfassung zu vergleichen mit einem Ergebnis einer nachfolgenden Inspektion, etwa einer Behälterwand-Dicken-Inspektion oder einer Bodeninspektion. Auf Basis dieses Vergleichs können weitere Prozessparameter wie insbesondere Blasparameter angepasst werden, um auf diese Weise sich selbst verbessernde Rezepte für die erfindungsgemäße Vorrichtung zu erhalten.

Bei einer bevorzugten Ausführungsform sind jedoch in einer Grundausführung die Parameter dieses Algorithmus in der Steuerung fest hinterlegt, wobei dieses rezeptabhängig oder rezeptunabhängig erfolgen kann.

Dabei sind die Einflussparameter für diese Software bzw. diesen Algorithmus aus einer Gruppe von Parametern ausgewählt, welche die Geometrie des Kunststoffvorformlings, die Geometrie des gefertigten Behältnisses, die Infrarot-Absorption des Kunststoffvorformlings, einen oder mehrere Parameter für den Streckblasvorgang (wobei dies auch einen Drossel-Information über den Blasformvorgang sein kann) für welche das Grundrezept erstellt wurde.

Bei einer weiteren bevorzugten Ausführungsform weist die Vorrichtung eine weitere Inspektionseinrichtung auf, welche insbesondere stromabwärts einer Umformungseinrichtung zum Umformen von Kunststoffvorformlingen zu Kunststoffbehältnissen angeordnet ist. Diese weitere Inspektionseinrichtung kann dabei das Ergebnis der Umformung überprüfen.

So kann das Ergebnis eines Umformungsprozesses durch geeignete dem Blasprozess nachgelagerte Inspektionstechnik und insbesondere in-Line Inspektionstechnik (z.B. Wanddickenmessung, Bodeninspektion) überprüft werden. Diese zusätzlichen Messtechniken könnten in einer weiteren Ausführungsform der Idee zur Parameteroptimierung des Algorithmus rückgespielt und verwendet werden. Auf diese Weise kann eine selbstlernende Parameter Optimierung vorgenommen werden.

Bei einer weiteren bevorzugten Ausführungsform weist die Vorrichtung eine Erfassungseinrichtung auf, welche zur Erfassung eines Absorptionsverhaltens der Kunststoffvorformlinge geeignet und bestimmt ist. Diese Erfassungseinrichtung kann dabei in einem Einlaufbereich angeordnet sein, in dem die Kunststoffvorformlinge in die Erwärmungseinrichtung einlaufen oder auch entlang einer Erwärmungsstrecke. Auch können mehrere derartiger Erfassungseinrichtungen vorgesehen sein.

Bei einer weiteren vorteilhaften Ausführungsform weist die Vorrichtung eine Anpassungseinrichtung und/oder eine zusätzliche Temperiereinrichtung und insbesondere eine zusätzliche Erwärmungseinrichtung auf, um die Erwärmung einzelner Kunststoffvorformlinge oder von Gruppen von Kunststoffvorformlingen (insbesondere individuell) zu verändern und insbesondere zu erhöhen. Auf diese Weise kann eine individuelle Einstellung einer Heizleistung und/oder einer Heizzeit der Kunststoffvoformlinge vorgenommen werden.

So kann eine Heizleistung an einzelnen Kunststoffvorformlinge oder an Gruppen von (insbesondere aufeinanderfolgenden) Kunststoffvorformlingen angepasst und insbesondere erhöht werden. Dabei kann diese Anpassungseinrichtung derart ausgebildet sein, dass eine zusätzliche Erwärmung des gesamten Kunststoffvorformlings erfolgt, es wäre jedoch auch möglich, dass eine derartige Anpassung in bestimmten lokalen Bereichen des Kunststoffvorformlings erfolgt. Die Anpassung kann dabei in Reaktion auf ein (insbesondere gemessenes) Absorptionsverhalten und/oder eine (insbesondere gemessene) Temperatur der Kunststoffvorformlinge erfolgen.

Bevorzugt ist diese Anpassungseinrichtung entlang des Transportpfads der Kunststoffvorformlinge angeordnet, etwa in einem Einlauf oder entlang der Transportstrecke.

Bei einer vorteilhaften Ausführungsform weist die Anpassungseinrichtung wenigstens eine Strahlungseinrichtung und insbesondere wenigstens einen Laser auf. Diese Strahlungseinrichtung kann dabei lokal einzelne Bereiche der Kunststoffvorformlinge zusätzlich erwärmen oder aber auch einzelne Kunststoffvorformlinge in ihrer Gesamtheit. Es wäre auch eine zusätzliche Erwärmung mittels Mikrowellen möglich.

Es wäre jedoch auch eine (individuelle) Kühlung einzelner Kunststoffvorformlinge, etwa durch Beaufschlagung mit Kühlluft denkbar (oder zur zusätzlichen Erwärmung durch Beaufschlagung mit Heißluft).

Die vorliegende Erfindung ist weiterhin auf eine Anordnung zur Herstellung von Kunststoffbehältnissen mit einer Vorrichtung der oben beschriebenen Art und einer dieser Vorrichtung in der Transportrichtung der Kunststoffvorformlinge nachgeordneten Umformungseinrichtung zum Umformen von Kunststoffvorformlingen zu Kunststoffbehältnissen gerichtet, wobei diese Umformungseinrichtung eine Vielzahl von Umformungsstationen zum Umformen der Kunststoffvorformlinge zu Kunststoffbehältnissen aufweist und die Anordnung eine Zuordnungseinrichtung aufweist, welche jedem von der Temperaturerfassungseinrichtung inspizierten Kunststoffvorformling eine bestimmte Umformungsstation zuordnet, in welcher dieser Kunststoffvorformling umgeformt wird.

Auf diese Weise ist eine individuelle Anpassung eines Umformungsvorgangs für jeden Kunststoffvorformling individuell anpassbar und insbesondere auf das Ergebnis einer Inspektion dieses Kunststoffvorformlings anpassbar.

Bei einer weiteren bevorzugten Ausführungsform weist die Anordnung eine Steuerungseinrichtung und/oder Regelungseinrichtung auf, welche den Umformungsprozess in Reaktion auf ein Ergebnis der Temperaturerfassung und/oder einen von der Temperaturerfassungseinrichtung steuert und insbesondere regelt. Beispielsweise können Parameter des Blasvorgangs, wie etwa Blasdrücke oder Blasdauern angepasst und/oder verändert werden.

Bevorzugt weist die Anordnung eine Ausschleuseeinrichtung auf, welche dazu geeignet und bestimmt ist, Kunststoffvorformlinge aus dem Transportpfad auszuschleusen. Insbesondere ist dabei diese Ausschleuseeinrichtung nach der Erwärmungseinrichtung angeordnet. Bei einer weiteren bevorzugten Ausführungsform ist die Ausschleuseeinrichtung vor der Umformungseinrichtung angeordnet

Die vorliegende Erfindung ist weiterhin auf ein Verfahren zum Erwärmen von Kunststoffvorformlingen gerichtet wobei die Kunststoffvorformlinge mit einer Transporteinrichtung entlang eines vorgegebenen Transportpfads transportiert werden und mit wenigstens einer Heizeinrichtung, welche entlang des Transportpfads der Kunststoffvorformlinge angeordnet ist, während ihres Transports erwärmt werden.

Erfindungsgemäß erfasst eine Temperaturerfassungseinrichtung eine Temperatur der Kunststoffvorformlinge ortsaufgelöst. Bevorzugt wird die Temperatur der Kunststoffvorformlinge während deren Transport d. h. während deren Transportbewegung erfasst.

Vorteilhaft wird auf Basis dieser Temperaturerfassung wenigstens ein Wert ausgegeben, der zur Steuerung oder Regelung der Erwärmungseinrichtung und/oder einer dieser nachgeordneten Umformungseinrichtung dient.

Die vorliegende Erfindung ist weiterhin auf eine Vorrichtung zum Herstellen von Kunststoffbehältnissen gerichtet, welche eine Erwärmungseinrichtung aufweist, welche Kunststoffvorformlinge erwärmt, wobei diese Erwärmungseinrichtung eine Transporteinrichtung aufweist, welche die Kunststoffvorformlinge während deren Erwärmung vereinzelt entlang eines vorgegebenen Transportpfads transportiert, sowie wenigstens eine Heizeinrichtung, welche die Kunststoffvorformlinge während deren Transport entlang des Transportpfads erwärmt, wobei die Erwärmungseinrichtung bevorzugt weiterhin eine erste Steuerungseinrichtung und insbesondere eine erste Regelungseinrichtung zum Steuern und/oder Regeln des Erwärmungsvorgangs aufweist.

Weiterhin weist die Vorrichtung eine Umformungseinrichtung auf, welche die erwärmten Kunststoffvorformlinge zu Kunststoffbehältnissen umformt, wobei diese Umformungseinrichtung eine Vielzahl von Umformungsstationen zum Umformen der Kunststoffvorformlinge zu Kunststoffbehältnissen aufweist, wobei diese Umformungseinrichtung in der Transportrichtung der Kunststoffvorformlinge nach der Erwärmungseinrichtung angeordnet ist, und wobei die Erwärmungseinrichtung und/oder die Umformungseinrichtung mindestens eine Regelungseinrichtung aufweist, welche eine Regelung des Erwärmungsvorgangs und/oder des Umformungsvorgangs in Abhängigkeit von wenigstens einer Eigenschaft der Kunststoffvorformlinge ermöglicht.

Dabei kann die Umformungseinrichtung eine zweite Steuerungseinrichtung und insbesondere eine zweite Regelungseinrichtung aufweisen, welche eine Regelung des Umformungsvorgangs in Abhängigkeit von wenigstens einer Eigenschaft der Kunststoffvorformlinge steuert.

Weiterhin weist die Vorrichtung bevorzugt wenigstens eine Temperaturerfassungseinrichtung auf, welche in einem Bereich der Erwärmungseinrichtung oder zwischen der Erwärmungseinrichtung und der Umformungseinrichtung angeordnet ist, und welche dazu geeignet und bestimmt ist, eine Temperatur der Kunststoffvorformlinge zu erfassen.

Erfindungsgemäß berücksichtigt wenigstens eine der Steuerungseinrichtungen und/oder Regelungseinrichtungen zur Regelung wenigstens eine den Erwärmungsprozess und/oder den Umformungsprozess beeinflussende und variable Größe vorab.

Vorteilhaft ist die Eigenschaft des Kunststoffvorformlings aus einer Gruppe von Eigenschaften ausgewählt, welche einen Wassergehalt, IR-Kennwert und Temperatur des Kunststoffvorformlings enthält.

Bei dieser Eigenschaft kann es sich auch um eine charakteristische Eigenschaft handeln, welche diesen Kunststoff charakterisiert, welche beispielsweise durch dessen Material vorgegeben ist.

Es wird darauf hingewiesen, dass die in Bezug auf diese Erfindung beschriebenen vorteilhaften Ausführungsformen und Weiterbildungen auch auf die oben beschriebene Erfindung Anwendung finden können. Ebenso können die oben unter Bezugnahme auf die oben genannte Erfindung genannten vorteilhaften Ausführungsformen und Weiterbildungen auf die hier genannte Erfindung Anwendung finden. Auch können in einer besonders bevorzugten Ausführungsform die beiden Erfindungen miteinander kombiniert werden, was insbesondere bei der Regelung der Umformungseinrichtung vorteilhaft sein kann.

Im derzeitigen Stand der Technik ist die Regelung insbesondere der Umformungseinrichtung, wie etwa einer Blasmaschine, eine relativ wenig aufwendige Vorgehensweise. So ist es bekannt, dass die Temperatur der Kunststoffvorformlinge am Ausgang der Erwärmungseinrichtung gemessen wird und damit die Erwärmungseinrichtung selbst (nach-) geregelt wird.

Damit werden jedoch Störgrößen und Änderungen von beispielsweise Eigenschaften der Kunststoffvorformlinge oder auch Umgebungsbedingungen erst über eine Änderung der Temperatur der Kunststoffvorformlinge erfasst und wiederum zur Regelung herangezogen. Damit kann gewissermaßen im Nachhinein geregelt werden, nachdem beispielsweise Abweichungen von Temperaturen der Kunststoffvorformlinge von einer Soll-Temperatur festgestellt werden.

Daneben ist es auch bekannt, dass der Benutzer manuell in die Heizeinrichtung eingreift oder auch in die Blasformmaschine, um so den jeweiligen Umformungsprozess zu ändern. Entsprechend sind auch Systeme bekannt, die beispielsweise über eine Messung der Wanddicken der bereits geblasenen Behältnisse den Prozess regeln. Damit wird beispielsweise eine sich ändernde Eingangstemperatur der Kunststoffvorformlinge erst zur Regelung der Maschine herangezogen, wenn diese sich schon in einer Änderung der Ausgangstemperatur und damit auch der Behältniseigenschaften ausgewirkt hat. Bei der hier vorgeschlagenen Vorgehensweise liegt daher der Erfindung ebenso wie oben die Aufgabe zugrunde, eine Regelung zu einem früheren Zeitpunkt zu ermöglichen.

Es wird daher vorgeschlagen, dass die Regelung die variable Größe bereits vorab berücksichtigt, das heißt, unter "vorab" wird dabei verstanden, dass diese Größe berücksichtigt wird, bevor sie sich messbar beispielsweise durch eine Temperaturerwärmung des Kunststoffvorformlings auswirkt. Dabei kann die Maschine insbesondere prognostizieren, wie sich bestimmte variable Größen oder auch deren Änderungen auf das Herstellungsverfahren und insbesondere den Erwärmungsprozess und/oder den Umformungsprozess oder auch auf das fertige Behältnis auswirken.

Bevorzugt sind diese variablen Größen aus einer Gruppe von Größen ausgewählt, welche eine Luftfeuchtigkeit, einen Umgebungsdruck, eine Umgebungstemperatur, Eigenschaften der Kunststoffvorformlinge und dergleichen enthält.

Im Rahmen dieser Erfindung wird daher vorgeschlagen, dass eine Temperaturverteilung nach dem Heizprozess unter den jeweils gegebenen Voraussetzungen sein wird oder wie sich bestimmte Ausgangsbedingungen bzw. variable Größen auf die Temperaturverteilung auswirken werden.

Daneben können auch andere Eigenschaften wie etwa eine Wanddickenverteilung prognostiziert werden (insbesondere aus den oben genannten variablen Größen).

Im Rahmen dieser Erfindung wird daher vorgeschlagen, für die Regelung des Heizprozesses und/oder des Umformungsprozesses bzw. Blasprozesses für die ganze Maschine oder für den Heiz- und/oder Blasprozess eines einzelnen Kunststoffvorformlings eine Änderung der Eigenschaften des Kunststoffvorformlings und/oder sonstiger Einflussgrößen (die unten noch genauer erwähnt werden) direkt heranzuziehen, ohne erst auf das Ergebnis des Prozesses durch die sich ändernden Eigenschaften der Regelgröße zu warten.

So kann beispielsweise eine sich ändernde Eigenschaft des Kunststoffvorformlings, wie etwa ein anderes Material, bereits bei der Regelung der Heizeinrichtung und/oder der Umformungseinrichtung berücksichtigt werden, bevor diese sich in den tatsächlichen Erwärmungsvorgang manifestiert. Bevorzugt berücksichtigen beide Regelungseinrichtungen, das heißt die Regelungseinrichtung der Heizeinrichtung und auch die Regelungseinrichtung der Blasformeinrichtung, die genannte variable Größe - insbesondere vorab. Es ist dabei möglich, dass diese Regelungseinrichtungen getrennt der Heizeinrichtung und der Umformungseinrichtung zugeordnet sind. Es wäre jedoch auch denkbar, dass eine gesamte bzw. gemeinsame Regelungseinrichtung vorgesehen ist, welche sowohl die Regelung der Heizeinrichtung als auch der Umformungseinrichtung bewirkt.

Bei einer weiteren bevorzugten Ausführungsform weist die Erwärmungseinrichtung eine Vielzahl von Heizeinrichtungen auf. Bevorzugt sind diese Heizeinrichtungen stationär gegenüber dem Transportpfad der Kunststoffvorformlinge angeordnet. Bevorzugt sind diese mehreren Heizeinrichtungen auch unabhängig voneinander steuer- und/oder regelbar.

Es wird daher weiterhin vorgeschlagen, dass eine bestimmte Größe, wie etwa ein Umgebungsparameter, wie eine Umgebungstemperatur oder auch eine Eigenschaft des Kunststoffvorformlings, insbesondere aufgrund von Erfahrungswerten, vorab berücksichtigt wird und beispielsweise bereits bevor oder während der Kunststoffvorformling in die Heizeinrichtung bzw. Erwärmungseinrichtung einläuft, eine entsprechende Modifikation vorgenommen wird, um ein ideales Ergebnis des nachfolgenden Umformungsprozesses zu erreichen.

Es wird daher vorgeschlagen, dass die Steuerung und/oder die oben genannten Regelungseinrichtungen der Maschine in irgendeiner und insbesondere einer vorgegebenen Art und Weise Prognosen über die Auswirkung der Änderung der Eingangsgröße treffen können. Damit handelt es sich, wie oben erwähnt, bei dieser variablen Größe bevorzugt um eine Eingangsgröße für einen Prozess und/oder eine Vorgehensweise, der anschließend die Erwärmungseinrichtung und/oder die Umformungseinrichtung regelt. Diese Prognosen werden bevorzugt getroffen, um eine Änderung der Eingangsgröße auszugleichen, ohne dass sie sich in einer großen Änderung der Behältereigenschaften auswirkt.

Ein Beispiel für eine derartige Eingangsgröße ist auch die oben beschriebene ortsaufgelöste Erfassung der Temperatur der Kunststoffvorformlinge. Anhand dieser ortsaufgelösten Temperatur kann die Regelungseinrichtung der Erwärmungseinrichtung und/oder die Regelungseinrichtung für die Umformungseinrichtung nachgeregelt werden, um so im Ergebnis wieder eine zufriedenstellende Qualität der erzeugten Kunststoffbehältnisse zu erlangen.

Bevorzugt berücksichtigt die Regelungseinrichtung auch Werte, die von der Temperaturerfassungseinrichtung ausgegeben werden. Auf diese Weise kann auch auf Basis dieser Werte die Erwärmungseinrichtung und/oder die Umformungseinrichtung nachgeregelt werden.

Bei einer bevorzugten Ausführungsform weist die Umformungseinrichtung einen bewegbaren und insbesondere drehbaren Träger auf. Bevorzugt sind an diesem Träger Umformungsstationen angeordnet, wobei diese Umformungsstationen bevorzugt jeweils Blasformen aufweisen, innerhalb derer die Kunststoffvorformlinge zu den Kunststoffbehältnissen umformbar sind.

Weiterhin weisen bevorzugt diese Umformungsstationen auch stangenartige Körper, insbesondere sogenannte Reckstangen auf, die in das Innere der Kunststoffvorformlinge einführbar sind, um diese in deren Längsrichtung zu dehnen.

Bei einer weiteren bevorzugten Ausführungsform weisen diese Umformungsstationen jeweils Beaufschlagungseinrichtungen auf, welche die Kunststoffvorformlinge mit einem fließfähigen Medium, insbesondere mit einem gasförmigen oder auch flüssigen Medium beaufschlagen.

Bevorzugt wirkt die Regelungseinrichtung auf eine und bevorzugt mehrere Regelungsgrößen ein. Dabei sind diese Regelungsgrößen gewählt aus einer Gruppe von Größen, welche einen oder mehrere Drücke, mit denen die Kunststoffvorformlinge beaufschlagt werden, eine Geschwindigkeit der Reckstange, die Größe eines Vorblasdrucks, die Größe eines Zwischenblasdrucks, die Größe eines Fertigblasdrucks, eine Abfolge der Beaufschlagung mit den Drücken und dergleichen enthält.

Die erste Regelungseinrichtung, welche die Erwärmungseinrichtung regelt, kann ebenfalls bevorzugt wenigstens eine und bevorzugt wenigstens eine Vielzahl von Regelungsgrößen ändern und/oder steuern. Diese Größen sind aus einer Gruppe von Größen ausgewählt, welche eine Heizleistung, insbesondere eine Heizleistung der einzelnen Heizeinrichtungen, eine Heizleistung der Heizeinrichtungen in Abhängigkeit von einer Höhe des Kunststoffvorformlings und dergleichen enthält. Bevorzugt weisen diese Heizeinrichtungen eine Vielzahl von Heizstrahlern auf, die besonders bevorzugt übereinander in der Richtung der zu erwärmenden Kunststoffvorformlinge angeordnet sind. Dabei ist es möglich, dass diese einzelnen Heizstrahler separat angesteuert werden, und damit bevorzugt unterschiedliche Bereiche in der Längsrichtung des Kunststoffvorformlings unterschiedlich erwärmt werden.

Eine weitere zu regelnde Größe kann beispielsweise eine Drehgeschwindigkeit der Kunststoffvorformlinge um deren eigene Achse sein. Besonders bevorzugt weist die Erwärmungseinrichtung eine Dreheinrichtung auf, welche die einzelnen Kunststoffvorformlinge bezüglich deren Längsrichtungen dreht. Dabei ist es möglich, dass jeder einzelne Kunststoffvorformling separat gedreht wird. Es wäre jedoch auch möglich, dass die Kunststoffvorformlinge einheitlich gedreht werden. Damit kann besonders bevorzugt auch etwa eine Drehgeschwindigkeit dieser Kunststoffvorformlinge bezüglich ihrer Längsrichtungen angepasst werden.

Besonders bevorzugt weist die Vorrichtung eine Prozessoreinrichtung auf, welche auf Basis der variablen Größe und/oder auf Basis der Änderung der variablen Größe eine Bestimmungsgröße ermittelt, welche von wenigstens einer der Regelungseinrichtungen und bevorzugt von beiden Regelungseinrichtungen zur Regelung verwendbar ist und/oder welche eine entsprechende Regelung bewirkt. So ist es möglich, dass die Prozessoreinrichtung beispielsweise aus einer Größe, welche eine sich ändernde Umgebungstemperatur der Maschine anzeigt, ermittelt, wie die Regelungen der Erwärmungseinrichtung und/oder der Umformungseinrichtung anzupassen sind. Dabei werden die Erwärmungseinrichtung und/oder die Umformungseinrichtung entsprechend angesteuert.

Damit wird bevorzugt unter der variablen Größe die sich ändernde Eingangsgröße verstanden, wie etwa ein verändertes Material der Kunststoffvorformling oder eine veränderte Umgebungstemperatur. Die Prozessoreinrichtung ermittelt aus dieser variablen Größe eine Bestimmungsgröße, welche besagt bzw. ein Maß dafür ist, wie sich diese variable Größe auswirken wird, beispielsweise wie sich eine veränderte Umgebungstemperatur auf die Temperatur der Kunststoffvorformlinge am Ausgang der Erwärmungseinrichtung auswirken wird. Die Regelungseinrichtung passt dann auf Basis dieser Bestimmungsgröße eine Regelungsgröße an, wie etwa die Heizleistung der Erwärmungseinrichtungen und/oder einen Blasdruck der Umformungseinrichtung, so dass diese Heizleistungen und/oder der Blasdruck entsprechend die Regelungsgrößen sind.

Bevorzugt ist die Prozessoreinrichtung dazu geeignet und bestimmt, anhand der variablen Größe und/oder einer Änderung der variablen Größe, deren Auswirkung auf den Erwärmungsprozess und/oder den Umformungsprozess zu ermitteln und/oder zu prognostizieren. Anhand dessen wird die Auswirkung auf die Regelung und/oder die Regelung beeinflusst.

Bei einer bevorzugten Ausführungsform ermittelt die Vorrichtung und/oder die Prozessoreinrichtung die Bestimmungsgröße und/oder Regelungsgröße auf Basis eines Modells. Damit hat die Steuerung und/oder Regelung bevorzugt ein Modell implementiert, welches den Zusammenhang zwischen den Einflussgrößen und den Ergebnissen bzw. den Behältniseigenschaften und/oder den Bestimmungsgrößen ermittelt. Dabei kann dieses Modell in einer Maschinensteuerung fest hinterlegt sein. Es kann jedoch auch von dem Bediener parametrierbar sein oder auch durch die Vorrichtung selbst und/oder eine Messung der Eigenschaften der Behältnisse parametrierbar sein.

Bei einer bevorzugten Ausführungsform weist die Vorrichtung daher auch eine Inspektionseinrichtung auf, welche die gefertigten Behältnisse bzw. die geblasenen Behältnisse inspiziert. Diese können dabei beispielsweise hinsichtlich einer Wandungsstärke ihrer Wandung überprüft werden. Daneben können auch lokale Wandungsstärken-Unterschiede festgestellt werden. Auch die Ergebnisse dieser Inspektion werden bevorzugt bei der Regelung der Erwärmungseinrichtung und/oder der Umformungseinrichtung berücksichtigt.

Bevorzugt weist die Vorrichtung eine Speichereinrichtung auf, in der sowohl Bestimmungsgrößen als auch Abweichungen der Eingangsgrößen als auch Größen, die sich aus der Inspektion der gefertigten Behältnisse und/oder der erwärmten Kunststoffvorformlinge ergeben, aufgenommen werden. Auf diese Weise können eine Vielzahl von Wertetupeln festgelegt werden.

Beispielsweise kann festgelegt und gespeichert werden, welche Wandungsstärke und welche Temperatur eines erwärmten Kunststoffvorformlings sich ergeben, wenn bestimmte Umgebungsparameter, wie beispielsweise eine Umgebungstemperatur, vorliegen und dabei ein bestimmtes Material des Kunststoffvorformlings verwendet wird. Weiterhin können in diese Speichereinrichtung eine Vielzahl derartiger Werte eingehen.

Auf diese Weise ist es möglich, dass die Maschine gewissermaßen selbst lernt und in einer Speichereinrichtung eine Vielzahl derartiger Zuordnungen abspeichert. Falls sich in einem künftigen Betrieb eine Umgebungseigenschaft wie etwa eine Umgebungstemperatur ändert, kann diese Änderung berücksichtigt werden und aufgrund der gespeicherten Erfahrungswerte entsprechend nachgeregelt werden, damit die Behältnisqualität gleich bleibt.

Es wird daher insbesondere vorgeschlagen, dass im Rahmen der Regelung der Umformungseinrichtung und/oder der Erwärmungseinrichtung nicht nur wie üblich als Regelungsgrößen die Ergebnisse berücksichtigt werden, sondern auch sich ändernde Eingangsgrößen. So kann beispielsweise für ein bestimmtes Material eines Kunststoffvorformlings eine Vielzahl von Umgebungstemperaturen abgespeichert sein und beispielsweise auch eine Vielzahl von Dicken der Wandungen der Kunststoffvorformlinge. Dabei kann beispielsweise einem bestimmten Material in einer Datenbank oder auch einem Look-Up-Table oder mittels eines Regressionsmodells für eine bestimmte Temperatur und eine bestimmte Wanddicke ein Erwartungswert zugeordnet werden, wie dieser Kunststoffvorformling erwärmt wird. Dieser Erwartungswert kann der Regelung der Blasformmaschine und auch der Erwärmungseinrichtung übermittelt werden und diese kann den Prozess entsprechend ansteuern oder modifizieren (in entsprechender Weise wie im Falle eines gemessenen Ergebnisses).

Bei einer bevorzugten Ausführungsform ist die den Erwärmungsprozess und/oder den Umformungsprozess beeinflussende Größe aus einer Gruppe von Größen ausgewählt, welche physikalische Eigenschaften eines zu behandelnden Kunststoffvorformlings, wie insbesondere dessen Material, dessen Größe, eine Wandungsdicke oder dergleichen, Umgebungsbedingungen, wie insbesondere eine Umgebungstemperatur, einem Umgebungsdruck oder eine Umgebungsluftfeuchtigkeit und dergleichen, Maschinenzustände der Vorrichtungen und dergleichen enthält.

Bei einer weiteren bevorzugten Ausführungsform ermöglicht wenigstens die zweite Regelungseinrichtung eine individuelle Regelung für die Behandlung jedes Kunststoffvorformlings. Hierbei ist zu berücksichtigen, dass, wie oben erwähnt, die Umformungseinrichtung eine Vielzahl von Umformungsstationen aufweist, die jeweils zum Erzeugen eines Behältnisses dienen. Damit ist jedoch auch der Blasprozess jedes individuellen Kunststoffvorformlings individuell ansteuerbar.

Bei einer bevorzugten Ausführungsform weist die Vorrichtung eine Zuordnungseinrichtung auf, die jedem der Erwärmungseinrichtung zugeführten Kunststoffvorformling eine bestimmte Umformungsstation zuordnet, welche diesen Kunststoffvorformling umformt. Auf diese Weise ist der Prozess individuell an die einzelnen Kunststoffvorformlinge anpassbar.

Es wird darauf hingewiesen, dass die oben beschriebene Ausgestaltung, bei der lokal die Temperatur der Kunststoffvorformlinge ortsaufgelöst erfasst wird, eine mögliche Ausgestaltung der hier beschriebenen Erfindung darstellt. Die Werte dieser Inspektion können nämlich, bevor sie sich endgültig realisieren, bereits der Regelung der Heizeinrichtung oder auch der nachfolgenden Blasformmaschine zugeführt werden.

Bei einer weiteren bevorzugten Ausführungsform weist die Vorrichtung wenigstens eine Erfassungseinrichtung zum Erfassen der variablen Größe auf. So kann beispielsweise bei oder während der Erwärmungseinrichtung eine Inspektionseinrichtung vorgesehen sein, welche beispielsweise eine Wandungsstärke des Kunststoffvorformlings oder auch dessen Material erfasst. Dieser Wert kann vorab als variable Eingangsgröße für die Regelung verwendet werden.

Die vorliegende Erfindung ist weiterhin auf ein Verfahren zum Herstellen von Kunststoffbehältnissen gerichtet, wobei eine Erwärmungseinrichtung Kunststoffvorformlinge erwärmt, und wobei eine Transporteinrichtung dieser Erwärmungseinrichtung die Kunststoffvorformlinge während der Erwärmung vereinzelt, entlang eines vorgegeben Transportpfads transportiert und wenigstens eine (insbesondere stationär angeordnete) Heizeinrichtung die Kunststoffvorformlinge während deren Transport entlang des Transportpfads erwärmt, und wobei eine Umformungseinrichtung die erwärmten Kunststoffvorformlinge zu Kunststoffbehältnissen umformt, wobei diese Umformungseinrichtung eine Vielzahl von Umformungsstationen zum Umformen der Kunststoffvorformlinge zu Kunststoffbehältnissen aufweist, wobei diese Umformungseinrichtung in der Transporteinrichtung der Kunststoffvorformlinge nach der Erwärmungseinrichtung angeordnet ist, wobei mindestens eine Regelungseinrichtung der Erwärmungseinrichtung und/oder der Umformungseinrichtung den Erwärmungsvorgang und/oder den Umformungsvorgang in Abhängigkeit von wenigstens einer Eigenschaft der Kunststoffvorformlinge (10) steuert und/oder regelt.

Dabei kann eine Steuerungseinrichtung und/oder Regelungseinrichtung dieser Umformungseinrichtung den Umformungsvorgang in Abhängigkeit von wenigstens einer charakteristischen Eigenschaft der Kunststoffvorformlinge regeln.

Weiterhin erfasst bevorzugt wenigstens eine Temperaturerfassungseinrichtung in einem Bereich der Erwärmungseinrichtung oder zwischen der Erwärmungseinrichtung und der Umformungseinrichtung eine Temperatur der Kunststoffvorformlinge.

Bevorzugt steuert und/oder regelt eine erste Steuerungseinrichtung und/oder Regelungseinrichtung der Erwärmungseinrichtung wenigstens zeitweise den Erwärmungsvorgang.

Erfindungsgemäß berücksichtigt wenigstens eine der Regelungseinrichtungen zur Regelung wenigstens eine den Erwärmungsprozess und/oder den Umformungsprozess beeinflussende und variable Größe vorab, und die Regelung wird auch auf Basis dieser Größe durchgeführt. Bevorzugt berücksichtigen beide Regelungseinrichtungen die variable Größe vorab.

Es wird daher auch verfahrensseitig vorgeschlagen, dass im Gegensatz zu den bisherigen Regelungen auch Eingangsgrößen des Prozesses berücksichtigt werden. Bevorzugt wird dabei aus dieser Eingangsgröße bzw. der variablen Größe ermittelt, wie sich diese (insbesondere erfahrungsgemäß) auf den Erwärmungsprozess und/oder den Umformungsprozess auswirkt.

Bei einem bevorzugten Verfahren erfolgt die Regelung auf Basis eines Modells, welches auf Basis der variablen Größe deren Auswirkung auf den Erwärmungsprozess und/oder den Umformungsprozess prognostiziert. So kann etwa ein geändertes Material zur Folge haben, dass sich die Infrarotabsorption ändert, und dies kann prognostiziert werden, etwa auf Basis von vorbekannten Daten oder auf Basis von eingelernten Erfahrungen und/oder Erfahrungswerten.

Bevorzugt ist dieses Modell parametrierbar. Dabei ist es möglich, dass dieses Modell durch den Benutzer parametrierbar ist oder durch die Maschine selbst, beispielsweise in selbstlernender Weise. Daneben ist es jedoch auch möglich, dass dieses Modell fest hinterlegt ist.

Bei einem weiteren vorteilhaften Verfahren wird eine Erwärmung einzelner Vorformlinge oder einzelner Gruppen von Vorformlingen angepasst und insbesondere erhöht.

Bevorzugt erfolgt dabei diese Anpassung durch wenigstens einen Laser, insbesondere in Abhängigkeit von einem Absorptionsverhalten der Kunststoffvorformling. Bevorzugt erfolgt diese Anpassung während des Transports d.h. insbesondere während der Bewegung der Kunststoffvorformlinge.

Bevorzugt wird ein Absorptionsverhalten der Kunststoffvorformlinge bestimmt.

Weitere Vorteile und Ausführungsformen ergeben sich aus der beigefügten Zeichnung. Darin zeigt:

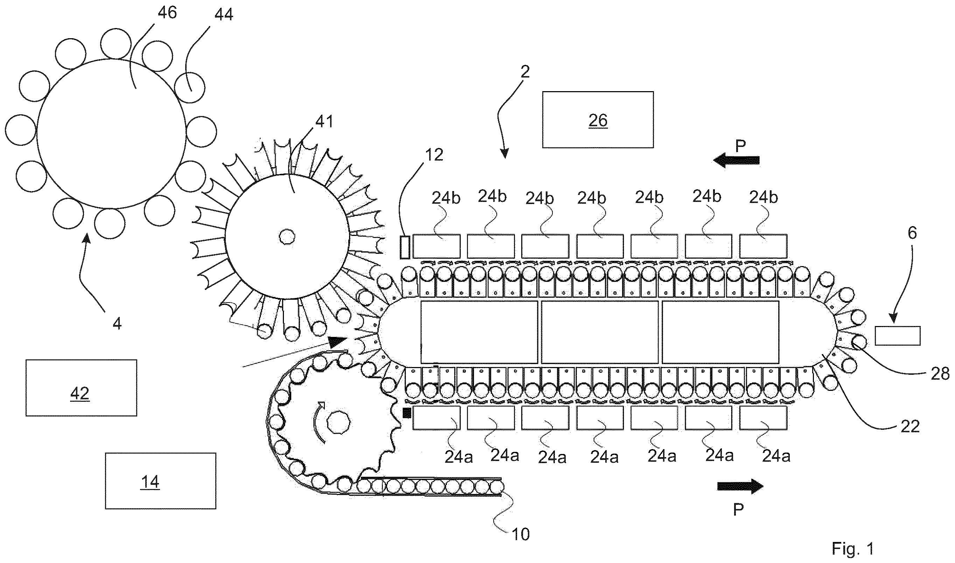

- Fig. 1: eine schematische Darstellung einer erfindungsgemäßen Vorrichtung zur Herstellung von Behältnissen.

Figur 1 zeigt eine schematische Darstellung einer erfindungsgemäßen Vorrichtung zum Herstellen von Behältnissen. Dabei werden Kunststoffvorformlinge 10 zunächst vereinzelt und einer in ihrer Gesamtheit mit 2 bezeichneten Erwärmungseinrichtung zugeführt. Diese Erwärmungseinrichtung 2 weist eine Transporteinrichtung 22 auf. Diese Transporteinrichtung ist hier als eine umlaufende Transportkette ausgebildet, an der eine Vielzahl von Halteeinrichtungen 28 angeordnet sind, welche jeweils die Kunststoffvorformlinge halten. Wie in Figur 1 erkennbar ist, werden dabei die Kunststoffvorformlinge auch bezüglich ihrer Längsachse gedreht. Entlang eines Transportpfades P ist eine Vielzahl von Heizeinrichtungen 24 a, 24 b stationär angeordnet. An diesen werden die Kunststoffvorformlinge 10 vorbeigeführt und dabei erwärmt.

Das Bezugszeichen 6 kennzeichnet eine Inspektionseinrichtung, die hier im Bereich der Umlenkung des Transportpfades P angeordnet ist, und insbesondere in einem Bereich, in dem keine Heizeinrichtungen angeordnet sind. Diese Inspektionseinrichtung nimmt, wie oben erwähnt, ein ortsaufgelöstes Bild des Kunststoffvorformlings und insbesondere ein ortsaufgelöstes Bild, dessen Temperaturcharakteristika auf.

Das Bezugszeichen 12 kennzeichnet eine weitere Temperaturerfassungseinrichtung, welche eine Gesamttemperatur bzw. eine integrale Temperatur der erwärmten Kunststoffvorformlinge erfasst. Auch dieser Temperaturwert kann zur Steuerung und/oder Regelung der Erwärmungseinrichtung oder der nachgeordneten Umformungseinrichtung 4 dienen.

Das Bezugszeichen 26 kennzeichnet eine Regelungseinrichtung zum Regeln der Erwärmungseinrichtung 2. An diese Erwärmungseinrichtung 2 schließt sich eine Transporteinrichtung 41 sowie eine Umformungseinrichtung 4 an. Diese Umformungseinrichtung 4 weist dabei eine Vielzahl von Umformungsstationen 44 auf, die an einen Träger 46 angeordnet sind. Das Bezugszeichen 42 kennzeichnet eine Regelungseinrichtung zum Regeln dieser Umformungseinrichtung.

Das Bezugszeichen 14 kennzeichnet grob schematisch eine Prozessoreinrichtung, welche unter Berücksichtigung wenigstens einer Eingangsgröße, bei der es sich insbesondere um die oben genannte variable Größe handelt, eine Bestimmungsgröße ermittelt, welche ein bestimmtes Verhalten bzw. eine bestimmte Eigenschaft des Kunststoffvorformlings oder des gefertigten Behältnisses prognostiziert

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 2: Erwärmungseinrichtung
- 10: Kunststoffvorformlinge
- 12: Temperaturerfassungseinrichtung
- 14: Prozessoreinrichtung
- 22: Transporteinrichtung
- 24a, 24b: Heizeinrichtungen
- 26: Regelungseinrichtung der Erwärmungseinrichtung
- 28: Halteeinrichtungen
- 41: Transporteinrichtung
- 42: Regelungseinrichtung (der Umformungseinrichtung)
- 44: Umformungsstation

- P: Transportpfad

## Patentansprüche

1. Vorrichtung (2) zum Erwärmen von Kunststoffvorformlingen (10) mit einer Transporteinrichtung (22), welche die Kunststoffvorformlinge entlang eines vorgegebenen Transportpfads (P) transportiert, mit wenigstens einer Heizeinrichtung (24a, 24b), welche entlang des Transportpfads der Kunststoffvorformlinge (10) angeordnet ist, um die Kunststoffvorformlinge während ihres Transports zu erwärmen,
**dadurch gekennzeichnet, dass**
die Vorrichtung (1) eine Temperaturerfassungseinrichtung (6) aufweist, welche dazu geeignet ist, eine Temperatur der Kunststoffvorformlinge ortsaufgelöst zu erfassen.

2. Vorrichtung (1) nach Anspruch 1,
**dadurch gekennzeichnet, dass**
die Temperaturerfassungseinrichtung wenigstens eine Infrarot-Bildaufnahmeeinrichtung aufweist, welche ein ortsaufgelöstes Bild der Kunststoffvorformlinge aufnimmt.

3. Vorrichtung (1) nach wenigstens einem der vorangegangenen Ansprüche,
**dadurch gekennzeichnet, dass**
die Temperaturerfassungseinrichtung (6) stationär angeordnet ist.

4. Vorrichtung (1) nach wenigstens einem der vorangegangenen Ansprüche
**dadurch gekennzeichnet, dass**
die Temperaturerfassungseinrichtung (6) entlang des Transportpfads der Kunststoffvorformlinge (10) nach einer ersten Gruppe von Heizeinrichtungen (24a) und vor einer zweiten Gruppe von Heizeinrichtungen (24b) angeordnet ist.

5. Vorrichtung (1) nach wenigstens einem der vorangegangenen Ansprüche
**dadurch gekennzeichnet, dass**
die Transporteinrichtung ein umlaufendes Transportmittel (22) aufweist, welches die Kunststoffvorformlinge entlang zweier geradliniger Transportabschnitte und einem dazwischenliegenden gekrümmten Transportabschnitt transportiert und die Temperaturerfassungseinrichtung in einem Bereich des gekrümmten Transportabschnitts angeordnet ist.

6. Vorrichtung (1) nach wenigstens einem der vorangegangenen Ansprüche
**dadurch gekennzeichnet, dass**
die Temperaturerfassungseinrichtung dazu geeignet und bestimmt ist, die Temperatur der Kunststoffvorformlinge entlang derer im Wesentlichen vollständigen Umfangsfläche und/oder Länge zu erfassen.

7. Vorrichtung (1) nach wenigstens einem der vorangegangenen Ansprüche,
**dadurch gekennzeichnet dass**
die Vorrichtung dazu geeignet ist, bestimmte Kunststoffvorformlinge in Reaktion auf eine erfasste Temperatur zu identifizieren und/oder zu kennzeichnen und bevorzugt eine Steuerungseinrichtung und/oder Regelungseinrichtung für diese Kunststoffvorformlinge einen Umformungsprozess anpasst.

8. Vorrichtung (1) nach wenigstens einem der vorangegangenen Ansprüche
**dadurch gekennzeichnet, dass**
die Temperaturerfassungseinrichtung eine Auswerteeinrichtung aufweist, welche von einer Bildaufnahmeeinrichtung aufgenommene Bilder auswertet und lokale Temperaturschwankungen der Kunststoffvorformlinge ermittelt.

9. Vorrichtung (1) nach wenigstens einem der vorangegangenen Ansprüche,
**dadurch gekennzeichnet, dass**
die Temperaturerfassungseinrichtung dazu geeignet und bestimmt ist, lokale Aufheizabweichungen eines Kunststoffvorformlings zu erfassen und bevorzugt dieser Kunststoffvorformling als fehlerhaft markierbar ist.

10. Vorrichtung (1) nach wenigstens einem der vorangegangenen Ansprüche,
**dadurch gekennzeichnet, dass**
die Vorrichtung eine weitere Inspektionseinrichtung aufweist, welche insbesondere stromabwärts einer Umformungseinrichtung zum Umformen von Kunststoffvorformlingen zu Kunststoffbehältnissen angeordnet ist.

11. Vorrichtung (1) nach wenigstens einem der vorangegangenen Ansprüche,
**dadurch gekennzeichnet, dass**
die Vorrichtung (1) eine Anpassungseinrichtung aufweist, um die Erwärmung einzelner Kunststoffvorformlinge oder von Gruppen von Kunststoffvorformlingen zu verändern und insbesondere zu erhöhen, wobei bevorzugt die Anpassungseinrichtung wenigstens eine Strahlungseinrichtung und insbesondere wenigstens einen Laser aufweist.

12. Anordnung zur Herstellung von Kunststoffbehältnissen mit einer Vorrichtung (2) nach wenigstens einem der vorangegangenen Ansprüche und einer dieser Vorrichtung (2) in der Transportrichtung der Kunststoffvorformlinge (1) nachgeordneten Umformungseinrichtung (4) zum Umformen von Kunststoffvorformlingen zu Kunststoffbehältnissen, wobei diese Umformungseinrichtung eine Vielzahl von Umformungsstationen zum Umformen der Kunststoffvorformlinge zu Kunststoffbehältnissen aufweist und die Anordnung eine Zuordnungseinrichtung aufweist, welche jedem von der Temperaturerfassungseinrichtung inspizierten Kunststoffvorformling eine bestimmte Umformungsstation zuordnet, in welcher dieser Kunststoffvorformling umgeformt wird.

13. Anordnung nach dem vorangegangenen Anspruch,
**dadurch gekennzeichnet, dass**
die Anordnung eine Ausschleuseeinrichtung aufweist, welche dazu geeignet und bestimmt ist, Kunststoffvorformlinge aus dem Transportpfad auszuschleusen.

14. Verfahren zum Erwärmen von Kunststoffvorformlingen (10) wobei die Kunststoffvorformlinge mit einer Transporteinrichtung (22) entlang eines vorgegebenen Transportpfads (P) transportiert werden und mit wenigstens einer Heizeinrichtung (24a, 24b), welche entlang des Transportpfads der Kunststoffvorformlinge (10) angeordnet ist, während ihres Transports erwärmt werden,
**dadurch gekennzeichnet, dass**
eine Temperaturerfassungseinrichtung (6) eine Temperatur der Kunststoffvorformlinge ortsaufgelöst erfasst.

15. Verfahren nach dem vorangegangenen Anspruch
**dadurch gekennzeichnet, dass**
eine Erwärmung einzelner Vorformlinge oder einzelner Gruppen von Vorformlingen angepasst wird.
